# NEUE EUROPÄISCHE PATENTSCHRIFT

(11) **EP 1 802 512 B2**
(45) Veröffentlichungstag und Bekanntmachung des Hinweises auf die Entscheidung über den Einspruch: **14.12.2011**
(45) Hinweis auf die Patenterteilung: 24.09.2008
(21) Anmeldenummer: 05802213.8
(22) Anmeldetag: 20.10.2005
(51) Int. Cl.: B62D 25/06, B60R 13/02, B62D 29/00, B62D 25/14

(54) **FAHRZEUGDACH**
VEHICLE ROOF
TOIT DE VEHICULE

(30) Priorität: 21.10.2004 DE 102004051380
(43) Veröffentlichungstag der Anmeldung: 04.07.2007
(73) Patentinhaber: Webasto AG, 82131 Stockdorf (DE)
(72) Erfinder: LEROY, Alain, 86911 Diessen-Dettenschwang (DE); PSCHORN, Heinz, 85221 Dachau (DE)
(74) Vertreter: Grünberg, Thomas
(86) Internationale Anmeldenummer: PCT/DE2005/001876
(87) Internationale Veröffentlichungsnummer: WO 2006/042529

(56) Entgegenhaltungen:
- WO-A-2004/043770
- DE-A1- 3 420 781
- DE-A1- 3 820 845
- DE-A1- 10 159 301
- DE-A1- 10 216 766
- US-A- 4 653 802
- A. WEISSBRICH ET AL MODULDACHSYSTEME FÜR EINE KUNDENGERECHTE FAHRZEUGINDIVIDUALISIERUNG Nr. 1264, VDI-BERICHTE, 1996

## Beschreibung

Die Erfindung betrifft ein Fahrzeugdach, insbesondere ein Fahrzeugdach eines Personenkraftwagens.

Heutzutage sind Dächer von Personenkraftwagen häufig in Form eines Dachmoduls ausgebildet, das bei der Montage des Fahrzeuges mit der Karosserie verbunden wird. In dem Dachmodul können verschiedene Funktionsteile, wie ein Schiebedach, eine Beleuchtung oder dergleichen integriert sein.

Aus der DE 199 58 605 A1 ist ein Dachmodul eines Fahrzeugdaches bekannt, das eine Dachaußenhaut und einen ein Innenverkleidungsteil darstellenden Himmel umfasst, an dem eine Antenne und weitere elektrische Einrichtungen befestigt sind. Der Himmel eignet sich aber nicht zur Befestigung schwerer Funktionselemente, wie beispielsweise einem Schiebedach oder dergleichen.

Aus der DE 199 51 659 C2 ist ein Fahrzeugdach bekannt, das als sandwichartiges Verbundbauteil ausgebildet ist. Dieses Fahrzeugdach, das mit seinen Außenrändern auf einen Karosserierahmen auflegbar und mit diesem fest verbindbar ist, weist eine als Dachaußenhaut dienende Außenschale auf. Diese ist mit einer Innenschale hinterfüttert, die aus Schaumkunststoff geformt ist und als Dachhimmel dient. In der Innenschale sind Ausnehmungen für Funktionselemente, wie Lautsprecher oder dergleichen, ausgebildet. Die Konfiguration dieses Fahrzeugdaches mit Funktionselementen ist schon bei der Herstellung der Innenschale, d. h. beim Anschäumen der Innenschale an die Dachaußenhaut festgelegt, da die entsprechenden Ausnehmungen schon aus ästhetischen Gründen mit den entsprechenden Funktionselementen bestückt werden müssen.

Ferner ist aus der US 5,825,096 ein Dachmodul bekannt, das mit einem Himmelelement versehen ist, an dessen der Windschutzscheibe zugewandten Randbereich ein Trägerelement für elektrische Einrichtungen angeordnet ist, das sich in Fahrzeugquerrichtung erstreckt und in eine Ausnehmung des Himmelelements eingepasst ist.

Aus der WO 2004/043770 A1 ist ein Fahrzeugdach nach dem Oberbegriff der Anspruchs 1 bekannt.

Der Erfindung liegt die Aufgabe zugrunde, ein Fahrzeugdach zu schaffen, das eine einfache und variable Montage einer jeweils zu bestimmenden Auswahl von Funktionselementen zulässt.

Diese Aufgabe ist erfindungsgemäß durch ein Fahrzeugdach mit den Merkmalen des Patentanspruches 1 gelöst.

Die Erfindung liegt mithin darin, ein insbesondere als Dachmodul ausgebildetes Fahrzeugdach, insbesondere ein Fahrzeugdach eines Personenkraftwagens, mit einem modulartigen, mehrschaligen Aufbau auszulegen, der eine variabel konfigurierbare, rohbaufeste Funktionsschale aufweist, die im Wesentlichen die Steifigkeit des Fahrzeugdaches vorgibt und zur variablen Aufnahme von Funktionselementen dient, wobei die Funktionsschale an der Fahrzeugaußenseite von einer Dachaußenhaut und an der Fahrzeuginnenseite von mindestens einem Innenverkleidungselement überdeckt ist.

Durch die erfindungsgemäß ausgebildete Funktionsschale kann eine standardisierte Plattform für ein Fahrzeugdach eines bestimmten Fahrzeugtyps geschaffen werden, die je nach Bedarf bzw. Kundenwunsch mit unterschiedlichen Funktionselementen versehen werden kann.

Funktionselemente im Sinne der Erfindung sind elektrische und/oder mechanische Bauteile, die optional oder auch zwingend erforderlich in einem Fahrzeugdach integriert sein können. Funktionselemente im Sinne der Erfindung sind beispielsweise Beleuchtungseinrichtungen oder auch Bauteile eines Dachöffnungssystems.

Dadurch, dass die Funktionsschale direkt an den Rohbau des Fahrzeuges angebunden ist, lassen sich auch Schnittstellen zwischen dem Fahrzeugdach und dem Rohbau in optimierter Weise gestalten. Dies betrifft insbesondere die Art der Befestigung des Fahrzeugdaches an dem Rohbau und im Falle der Integration eines Dachöffnungssystems die Ausbildung eines Wasserableitsystems, welches in die Funktionsschale integriert sein kann und das mit Kanälen, die im Rohbau ausgebildet sind, zu verbinden ist.

Als Rohbau ist im vorliegenden Zusammenhang der Teil der Fahrzeugkarosserie zu verstehen, der ein noch zu verkleidendes Gerippe des Fahrzeugs darstellt und den grundsätzlichen Aufbau sowie die Steifigkeit des Fahrzeuges im Wesentlichen vorgibt, aber noch nicht mit einem Dach versehen ist. So umfasst der Rohbau in der Regel bei einem als Limousine ausgebildeten Kraftfahrzeug die A-, B- und C-Säulen sowie Seitenrahmen, an denen das Fahrzeugdach nach der Erfindung vorzugsweise fixiert werden kann.

Die Begrifflichkeit "variabel konfigurierbar" bedeutet, dass die Funktionsschale mit derartigen Einrichtungen versehen ist, dass unterschiedliche Funktionselemente in Abhängigkeit von Vorgaben eines Fahrzeugherstellers und/oder eines Kunden auf der gleichen Plattform, d. h. an der Funktionsschale, einfach integriert bzw. montiert werden können. So kann das Fahrzeugdach flexibel ausgelegt und unter Verwendung der gleichen Plattform unterschiedlich konfiguriert werden. Die fertig konfigurierte Funktionsschale wird vor oder nach ihrer Bestückung mit den Funktionselementen mit der Dachaußenhaut versehen. Das fertige Fahrzeugdach kann dann auf einfache Weise an dem Fahrzeugrohbau montiert werden. Insbesondere können logistische Abläufe sowie Montageabläufe auf Seiten des Fahrzeugherstellers durch Einsatz des flexibel konfigurierbaren Fahrzeugdaches nach der Erfindung optimiert werden.

Die Funktionsschale, die auch fahrzeugstrukturelle Aufgaben übernehmen kann, kann des Weiteren mindestens ein Querträger, insbesondere mindestens einen Windlauf des Fahrzeugdaches umfassen. Diese Auslegung der Funktionsschale erleichtert dem Fahrzeughersteller die Integration von dem Rohbau zuzuordnenden Querträgern des Fahrzeugdaches. Diese können dann nämlich einfach zusammen mit dem Fahrzeugdach mit dem Fahrzeugrohbau verfügt werden.

Eine gewichtsmäßig besonders leichte Ausführungsform des Fahrzeugdaches nach der Erfindung liegt vor, wenn die Funktionsschale als Kunststoffformteil ausgebildet ist. Bei einer derartigen Funktionsschale lassen sich die Steifigkeit des Fahrzeugdaches vorgebende Strukturelemente, wie Dome, Rippen und dergleichen, problemlos integrieren, da für diese dann hinsichtlich ihrer Anordnung eine große Flexibilität besteht und sie somit funktionell günstigen bzw. optimierten Stellen der Funktionsschale vorgesehen sein können.

Die Herstellung einer aus Kunststoff gefertigten Funktionsschale erfolgt beispielsweise nach einem Spritzgießverfahren oder einem sonstigen Formgebungsverfahren, nach dem eine entsprechend der bestehenden Sicherheitsbestimmungen hinreichend verwindungssteife Funktionsschale hergestellt werden kann. Gegebenenfalls können in dem Kunststoffformteil Armierungen oder sonstige die Stabilität erhöhenden Elemente integriert sein. Alternativ ist es natürlich auch denkbar, die einen Aggregatträger darstellende Funktionsschale aus Stahl, Aluminium oder dergleichen zu fertigen. Eine als Kunststoffformteil ausgebildete Funktionsschale kann aber zu einer geringen Packagemasse des Fahrzeugdaches als eine aus Metall gefertigte Funktionsschale führen.

Um in dem Fahrzeugdach nach der Erfindung ein Dachöffnungssystem vorsehen zu können, ist die Funktionsschale werkseitig vorzugsweise mit einer ausschnittartigen Ausnehmung versehen, deren Fläche im Wesentlichen der Fläche einer Dachöffnung entspricht. Ein damit optional integrierbares Dachöffnungssystem kann beispielsweise ein elektrisches Schiebehubdach, ein Ausstelldach oder auch ein Panoramadach umfassen. Die Auslegung der Ausnehmung kann für verschiedene Dachöffnungssysteme einheitlich ausgelegt sein. Wenn bei der Konfigurierung des Fahrzeugdaches bei dieser Auslegung der Funktionsschale kein Dachöffnungssystem ausgewählt wird, sind die Dachaußenhaut und das karosseriefeste Innenverkleidungselement so ausgebildet, dass sie die Ausnehmung überdecken.

Die Funktionsschale ist vorzugsweise auch mit Einrichtungen zur Integration des Dachöffnungssystems versehen, welche insbesondere zur Fixierung mechanischer und elektrischer Bauteile des Dachöffnungssystems, wie einem Elektroantrieb, Antriebskabeln oder Antriebsrohren, dienen oder auch solche Bauteile selbst, wie Führungsschienen oder dergleichen, darstellen können.

Vorzugsweise ist die Funktionsschale mit einem Wasserableitsystem versehen, das bei Integration eines Dachöffnungssystems erforderlich ist. Das Wasserableitsystem kann bei einer aus Kunststoff gefertigten Funktionsschale direkt bei der Herstellung derselben in Form von Kanälen, die mit der Funktionsschale einstückig gefertigt sind, mit ausgeformt werden und ist vorzugsweise so ausgebildet, dass es bei Anbindung der Funktionsschale an den Fahrzeugrohbau mit in den Fahrzeugrohbau integrierten Wasserablaufkanälen zusammenwirkt.

Des Weiteren kann die Funktionsschale auch mit Luftleitkanälen, wie Klimakanälen, versehen sein, die einem Belüftungssystem oder auch einer Klimaanlage des betreffenden Fahrzeugs zugeordnet sein können. Auch diese können insbesondere bei Ausbildung der Funktionsschale als Kunststoffformteil direkt bei dessen Herstellung gegebenenfalls einstückig integriert werden.

Auch ist die Funktionsschale vorzugsweise mit Einrichtungen zur Integration elektrischer Bauteile versehen. Diese Einrichtungen können beispielsweise Ausnehmungen für Leuchten, Schalter, Lautsprecher oder dergleichen sowie Befestigungseinrichtungen für solche Funktionselemente sein. Auch kann an der Funktionsschale eine beispielsweise als Ausnehmung und/oder Fixiermittel ausgebildete Einrichtung zur Integration eines Antennensystems oder eines Multimediasystems vorgesehen sein.

Ferner kann an der Funktionsschale auch eine Verdrahtung aufgedruckt sein, was eine nur den Anforderungen entsprechend lange Ausbildung der Verdrahtung und damit eine Gewichtsersparnis gegenüber herkömmlichen Systemen ermöglicht, bei denen die Verdrahtung separat ausgeführt ist und aus Montagegründen eine zusätzliche Drahtlänge erforderlich ist.

Des Weiteren können an der Funktionsschale Einrichtungen zur zumindest teilweisen Integration eines Airbagsystems vorgesehen sein. Auch können Einrichtungen zur Integration von Gasgeneratoren für das Airbagsystem, insbesondere für ein Kopfairbagsystem vorgesehen sein.

Zweckmäßig ist es auch, wenn an der Funktionsschale mindestens ein Kopfaufschlagpad angeordnet ist, das gemäß sicherheitstechnischer Vorgaben, wie den so genannten Head Impact Criteria (HIC), ausgelegt ist.

Um das in der Regel an Rohbauseitenrahmen befestigte Innenverkleidungselement, das insbesondere einen Fahrzeughimmel darstellt, einfach zusätzlich fixieren zu können, sind an der Funktionsschale vorzugsweise Befestigungseinrichtungen für das Innenverkleidungselement ausgebildet. Das Innenverkleidungselement kann bei der Montage des als Dachmodul ausgebildeten Fahrzeugdaches schon an die Funktionsschale angebunden sein oder erst in einem nachfolgenden Arbeitsschritt unter der Funktionsschale angeordnet werden.

Zur exakten Positionierung des Innenverkleidungselements kann die Funktionsschale mit mindestens einer Positionierhilfe zur Montage des Innenverkleidungselements versehen sein. Diese umfasst beispielsweise ein so genanntes Masterhole und gegebenenfalls einen Dom.

Die Dachaußenhaut des Fahrzeugdaches nach der Erfindung stellt in der Regel kein strukturelles, die Steifigkeit des Daches vorgebendes Bauteil, sondern nur ein das äußere Erscheinungsbild des Fahrzeugdaches vorgebendes Bauteil dar, das an der Funktionsschale fixiert ist. Die Fixierung ist beispielsweise mittels eines Klebersystems, eines Rastsystems oder auch mittels eines Clipsystems realisiert. Die in der Regel flexibel ausgebildete Dachaußenhaut, die aus Stahl, Aluminium oder auch aus Kunststoff gefertigt sein kann, ist wechselbar ausgebildet, so dass ein Halter des betreffenden Fahrzeuges das Erscheinungsbild des Daches ohne großen Aufwand einfach dadurch ändern kann, dass er eine alternativ ausgebildete Dachaußenhaut anbringt.

Um eine hohe Steifigkeit im Verbindungsbereich zwischen der Funktionsschale und dem Rohbau zu erreichen, ist die Funktionsschale vorzugsweise mit dem Rohbau verschraubt und hierzu mit entsprechenden Ausnehmungen zum Durchgriff von Befestigungsschrauben versehen.

Zur weiteren Stabilisierung und zur Abdichtung kann die Funktionsschale mit einem Klebersystem zur Anbindung an den Rohbau versehen sein. Als Kleber kann beispielsweise ein Ein- oder Zweikomponentenkleber eingesetzt werden, der eine Kleberaupe bildet und im ausgehärteten Zustand eine gewisse Restelastizität aufweist.

Weitere Vorteile und vorteilhafte Ausgestaltungen des Gegenstandes nach der Erfindung sind der Beschreibung, der Zeichnung und den Patentansprüchen entnehmbar.

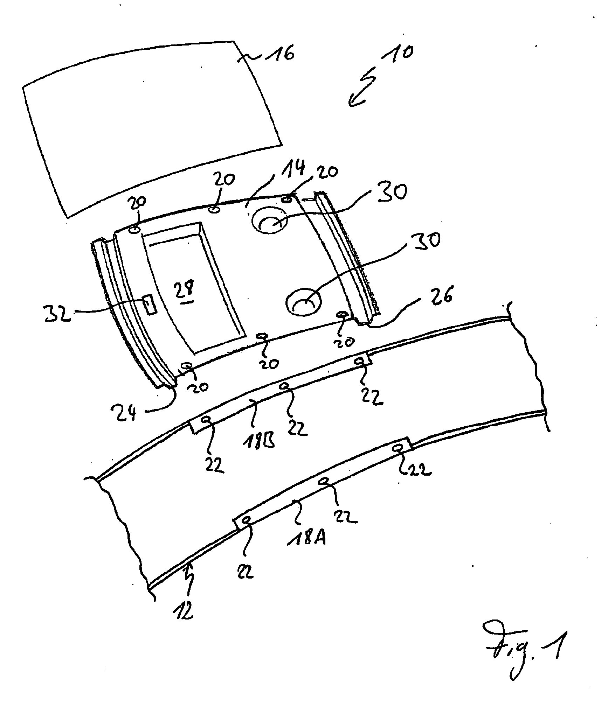

Ein Ausführungsbeispiel des Fahrzeugdaches nach der Erfindung ist in der Zeichnung schematisch vereinfacht dargestellt und wird in der nachfolgenden Beschreibung näher erläutert. Es zeigt
- Fig. 1: eine perspektivische Draufsicht auf ein erfindungsgemäß ausgebildetes Fahrzeugdach zusammen mit einem Bereich eines Fahrzeugrohbaus in Explosionsdarstellung; und

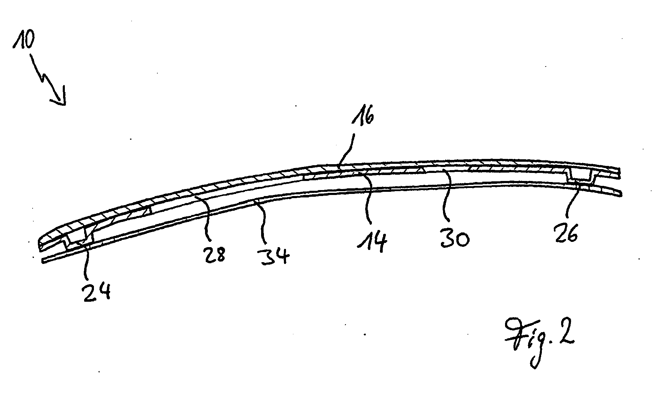

- Fig. 2: einen stark schematisierten Längsschnitt durch das Fahrzeugdach nach Fig. 1.

In der Zeichnung ist ein ein Fahrzeugdach bildendes Dachmodul 10 dargestellt, das als flexibel vorkonfigurierbares Dachmodul zur Anbindung an einen Rohbau 12 eines Kraftfahrzeuges ausgebildet ist.

Das Dachmodul 10 hat einen modulartigen, mehrschaligen Aufbau und umfasst eine ein Kunststoffspritzteil darstellende Funktionsschale 14, die im Wesentlichen die Steifigkeit des Dachmoduls 10 vorgibt, sowie eine ebenfalls aus Kunststoff bestehende Außenhaut 16, die das äußere Erscheinungsbild des Dachmoduls 10 vorgibt. Die Dachaußenhaut 16 ist mittels eines eine Fixiereinrichtung bildenden Klebesystems auf die Oberseite der Funktionsschale 14 aufgeklebt.

Die Funktionsschale 14 ist im montierten Zustand des Dachmoduls 10 über Rohbauseitenrahmenbereiche 18A, 18B direkt mit dem Rohbau 12 des Kraftfahrzeuges verschraubt und weist hierzu mit jeweils einer Bohrung 22 an den Rohbauseitenrahmenbereichen 18A, 18B korrespondierende, gegebenenfalls mit einem Innengewinde versehene Ausnehmungen 20 zum Eingriff von jeweils einer Befestigungsschraube auf.

Zur Gewährleistung einer hohen Dichtigkeit ist die Funktionsschale des Weiteren mittels einer hier nicht näher dargestellten Kleberaupe an den Rohbauseitenrahmenbereichen 18A und 18B angebunden.

In ihrem vorderen Randbereich weist die Funktionsschale 14 einen sich in Fahrzeugquerrichtung erstreckenden Abschnitt 24 auf, der einen vorderen Windlauf, mithin einen vorderen sicherheitsrelevanten Querträger des Fahrzeugdaches 10 bildet. In ihrem hinteren Randbereich weist die Funktionsschale 14 einen sich in Querrichtung des Fahrzeuges erstreckenden Abschnitt 26 auf, der einen hinteren Windlauf, mithin einen hinteren sicherheitsrelevanten Querträger des Fahrzeugdaches 10 bildet. Die Abschnitte 24 und 26 bilden also Strukturen, die für die Steifigkeit und Stabilität des betreffenden Kraftfahrzeuges in dessen Dachbereich von wesentlicher Bedeutung sind.

Des Weiteren sind an der Funktionsschale 14 ein Ausschnitt 28 für ein bei dem dargestellten Fahrzeugdach nicht vorgesehenes, ein Funktionselement darstellendes Dachöffnungssystem sowie Aufnahmen 30 für jeweils einen ein weiteres Funktionselement darstellenden Lautsprecher einer Audio/Videoanlage des betreffenden Fahrzeuges ausgebildet.

Auch ist an der Funktionsschale 14 eine Fixiereinrichtung 32 für einen ebenfalls ein Funktionselement darstellenden Elektroantrieb eines Dachöffnungssystems ausgebildet, mit dem das Fahrzeugdach 10 bei einer anderen Konfiguration ausgestattet sein könnte. Bei einer Ausstattung des Fahrzeugdaches 10 mit einem Dachöffnungssystem wäre auch die Dachaußenhaut 16 mit einem mit dem Ausschnitt 28 der Funktionsschale 14 korrespondierenden Ausschnitt versehen, der mittels eines verschiebbaren Deckelelements wahlweise öffenbar und schließbar wäre.

Des Weiteren weist die Funktionsschale 14 hier nicht näher dargestellte ausgedruckte, ebenfalls Funktionselemente darstellende Verdrahtungen für Innenbeleuchtungseinrichtungen des Kraftfahrzeuges auf.

An seiner Innenseite ist die Funktionsschale 14 von einem ein Innenverkleidungselement darstellenden Dachhimmel 34 überdeckt, der im Bereich der Aufnahmen 30 für die Lautsprecher zur optimierten Klangübertragung jeweils perforiert ausgebildet ist und im vorliegenden Fall erst nach Montage der Funktionsschale 14 an den Rohbauseitenrahmenbereichen 18A, 18B mit der Funktionsschale 14 verbunden wird.

### Bezugszeichen

- 10: Fahrzeugdach
- 12: Rohbau
- 14: Funktionsschale
- 16: Dachaußenhaut
- 18A,B: Seitenrahmenbereiche
- 20: Ausnehmung
- 22: Bohrung
- 24: vorderer Windlauf
- 26: hinterer Windlauf
- 28: Ausschnitt
- 30: Aufnahme
- 32: Fixiereinrichtung
- 34: Dachhimmel

## Patentansprüche

1. Fahrzeugdach, insbesondere eines Personenkraftwagens, mit einem modulartigen, mehrschaligen Aufbau, umfassend eine variabel konfigurierbare Funktionsschale (14), die im Wesentlichen die Steifigkeit des Fahrzeugdaches vorgibt, direkt an einen Rohbau (12) des Fahrzeuges anbindbar ist und zur variablen Aufnahme von Funktionselementen dient, eine Dachaußenhaut (16), die mittels einer Fixiereinrichtung an der Funktionsschale (14) fixiert ist, und mindestens ein Innenverkleidungselement (34), wobei die Funktionsschale (14) einen Ausschnitt (28) für ein Dachöffnungssystem und Einrichtungen zur Integration des Dachöffnungssystems umfasst, die zur Fixierung mechanischer und elektrischer Bauteile des Dachöffnungssystems dienen, **dadurch gekennzeichnet, dass** die Dachaußenhaut (16) den Ausschnitt (28) der Funktionsschale (14) überdeckt und die Dachaußenhaut (16) wechselbar ausgebildet ist.

2. Fahrzeugdach nach Anspruch 1, **dadurch gekennzeichnet, dass** die Funktionsschale (14) mindestens einen Querträger (24, 26), insbesondere mindestens einen Windlauf des Fahrzeugdaches umfasst.

3. Fahrzeugdach nach Anspruch 1 oder 2, **dadurch gekennzeichnet, dass** die Funktionsschale (14) ein Kunststoffformteil ist.

4. Fahrzeugdach nach einem der Ansprüche 1 bis 3, **dadurch gekennzeichnet, dass** die Funktionsschale (14) eine Ausnehmung (28) aufweist, deren Fläche im Wesentlichen der Fläche einer Dachöffnung entspricht.

5. Fahrzeugdach nach einem der Ansprüche 1 bis 4, **dadurch gekennzeichnet, dass** die Funktionsschale (14) mit mindestens einem Luftleitkanal, insbesondere einem Klimakanal versehen ist.

6. Fahrzeugdach nach einem der Ansprüche 1 bis 5, **dadurch gekennzeichnet, dass** die Funktionsschale (14) mit Einrichtungen zur Integration elektrischer Bauteile versehen ist.

7. Fahrzeugdach nach einem der Ansprüche 1 bis 6, **dadurch gekennzeichnet, dass** an der Funktionsschale (14) eine Verdrahtung aufgedruckt ist.

8. Fahrzeugdach nach einem der Ansprüche 1 bis 7, **dadurch gekennzeichnet, dass** die Funktionsschale (14) mit Einrichtungen zur zumindest teilweisen Integration eines Airbagsystems versehen ist.

9. Fahrzeugdach nach einem der Ansprüche 1 bis 8, **dadurch gekennzeichnet, dass** an der Funktionsschale (14) mindestens ein Kopfaufschlagpad ausgebildet ist.

10. Fahrzeugdach nach einem der Ansprüche 1 bis 9, **dadurch gekennzeichnet, dass** die Funktionsschale (14) mit Ausnehmungen (20) zur Verschraubung mit dem Rohbau versehen ist.

11. Fahrzeugdach nach einem der Ansprüche 1 bis 10, **dadurch gekennzeichnet, dass** die Funktionsschale (14) mit einem Klebersystem zur Anbindung an den Rohbau des Fahrzeuges versehen ist.

12. Fahrzeugdach nach einem der Ansprüche 1 bis 11, **dadurch gekennzeichnet, dass** die Funktionsschale (14) mit mindestens einer Positionierhilfe zur Montage des Innenverkleidungselements (34) versehen ist.

## Claims

1. Vehicle roof, in particular of a passenger vehicle, having a modular, multi-shell construction comprising a functional shell (14) which can be configured in a variable manner, substantially predetermines the rigidity of the vehicle roof, can be joined directly to the vehicle body shell (12) and serves to variably accommodate functional elements, a roof outer skin (16) which is fixed to the functional shell (14) by means of a fixing device, and at least one inner lining element (34), wherein the functional shell (14) comprises a cut-out opening (28) for a roof-opening system and devices for the integration of the roof-opening system, said devices serving to fix mechanical and electric components of the roof-opening system, **characterized in that** the roof outer skin (16) covers the cut-out opening (28) of the functional shell (14), and the roof outer skin (16) is of exchangeable design.

2. Vehicle roof according to Claim 1, **characterized in that** the functional shell (14) comprises at least one crossmember (24, 26), in particular at least one cowl of the vehicle roof.

3. Vehicle roof according to Claim 1 or 2, **characterized in that** the functional shell (14) is a moulded plastic part.

4. Vehicle roof according to one of Claims 1 to 3, **characterized in that** the functional shell (14) has a recess (28), the area of which substantially corresponds to the area of a roof opening.

5. Vehicle roof according to one of Claims 1 to 4, **characterized in that** the functional shell (14) is provided with at least one air-conducting duct, in particular an air conditioning duct.

6. Vehicle roof according to one of Claims 1 to 5, **characterized in that** the functional shell (14) is provided with devices for the integration of electric components.

7. Vehicle roof according to one of Claims 1 to 6, **characterized in that** wiring is imprinted on the functional shell (14).

8. Vehicle roof according to one of Claims 1 to 7, **characterized in that** the functional shell (14) is provided with devices for the at least partial integration of an airbag system.

9. Vehicle roof according to one of Claims 1 to 8, **characterized in that** at least one head impact pad is formed on the functional shell (14).

10. Vehicle roof according to one of Claims 1 to 9, **characterized in that** the functional shell (14) is provided with recesses (20) for bolting it to the body shell.

11. Vehicle roof according to one of Claims 1 to 10, **characterized in that** the functional shell (14) is provided with an adhesive system for joining it to the body shell of the vehicle.

12. Vehicle roof according to one of Claims 1 to 11, **characterized in that** the functional shell (14) is provided with at least one positioning aid for the installation of the inner lining element (34).

## Revendications

1. Toit de véhicule, en particulier d'un véhicule léger, avec une structure modulaire multicoque, comprenant une coque fonctionnelle (14) de configuration variable, qui prédéfinit essentiellement la rigidité du toit du véhicule, qui peut être rattachée directement à une structure de carrosserie (12) du véhicule, et qui sert à loger, de manière variable, des éléments fonctionnels, un panneau extérieur de toit (16), qui est fixé à la coque fonctionnelle (14) au moyen d'un dispositif de fixation, et au moins un élément d'habillage interne (34), la coque fonctionnelle (14) comprenant une découpure (28) pour un système d'ouverture du toit et des dispositifs pour l'intégration du système d'ouverture du toit, qui servent à fixer des composants mécaniques et électriques du système d'ouverture du toit, **caractérisé en ce que** le panneau extérieur de toit (16) recouvre la découpure (28) de la coque fonctionnelle (14) et le panneau extérieur de toit (16) est réalisé de manière interchangeable.

2. Toit de véhicule selon la revendication 1, **caractérisé en ce que** la coque fonctionnelle (14) comprend au moins une traverse (24, 26), notamment au moins un auvent du toit du véhicule.

3. Toit de véhicule selon la revendication 1 ou 2, **caractérisé en ce que** la coque fonctionnelle (14) est une pièce moulée en plastique.

4. Toit de véhicule selon l'une quelconque des revendications 1 à 3, **caractérisé en ce que** la coque fonctionnelle (14) présente un évidement (28) dont la surface correspond essentiellement à la surface d'une ouverture du toit.

5. Toit de véhicule selon l'une quelconque des revendications 1 à 4, **caractérisé en ce que** la coque fonctionnelle (14) est pourvue d'au moins un canal de guidage d'air, notamment d'un canal de climatisation.

6. Toit de véhicule selon l'une quelconque des revendications 1 à 5, **caractérisé en ce que** la coque fonctionnelle (14) est pourvue de dispositifs pour l'intégration de composants électriques.

7. Toit de véhicule selon l'une quelconque des revendications 1 à 6, **caractérisé en ce qu'**un câblage est imprimé sur la coque fonctionnelle (14).

8. Toit de véhicule selon l'une quelconque des revendications 1 à 7, **caractérisé en ce que** la coque fonctionnelle (14) est pourvue de dispositifs pour l'intégration au moins partielle d'un système d'airbag.

9. Toit de véhicule selon l'une quelconque des revendications 1 à 8, **caractérisé en ce qu'**au moins une plage d'impact pour la tête est réalisée sur la coque fonctionnelle (14).

10. Toit de véhicule selon l'une quelconque des revendications 1 à 9, **caractérisé en ce que** la coque fonctionnelle (14) est pourvue d'évidements (20) pour un vissage avec la structure de carrosserie.

11. Toit de véhicule selon l'une quelconque des revendications 1 à 10, **caractérisé en ce que** la coque fonctionnelle (14) est pourvue d'un système de collage pour assurer la liaison avec la structure de carrosserie du véhicule.

12. Toit de véhicule selon l'une quelconque des revendications 1 à 11, **caractérisé en ce que** la coque fonctionnelle (14) est pourvue d'au moins un auxiliaire de positionnement pour le montage de l'élément d'habillage interne (34).
